# EUROPÄISCHE PATENTANMELDUNG

(11) **EP 2 551 604 A1**
(43) Veröffentlichungstag der Anmeldung: **30.01.2013**
(21) Anmeldenummer: 11176028.6
(22) Anmeldetag: 29.07.2011
(51) Int. Cl.: F24D 11/00, F24D 17/00, F24D 19/10

(54) **Solaranlage**

(71) Anmelder: Robert Bosch GmbH, 70442 Stuttgart (DE)
(72) Erfinder: Hube, Werner, 73230 Kirchheim/Teck (DE); Prestle, Thomas, 72622 Nürtingen (DE)

(57) **Zusammenfassung**

Die Neuerung betrifft eine Solaranlage zur Warmwasserbereitung und/oder Heizungsunterstützung, mit mindestens einem Speicher für Warmwasser oder als Pufferspeicher in einem Heizungssystem mit mindestens einem Temperaturfühler zur Erfassung der Speichertemperatur, einem Wärmetauscher zur Beheizung des Speichers, einem Solarkreislauf über einen Solarkollektor mit Vorlaufleitung und Rücklaufleitung, einer Umwälzpumpe für ein Wärmeträgermedium in der Rücklaufleitung, einer dieser Umwälzpumpe nachgeschalteten Rückschlagklappe, einem Temperaturfühler zur Erfassung der Vorlauftemperatur im Solarkreislauf sowie einer Regeleinrichtung.

Der Neuerung liegt daher die Aufgabe zu Grunde, einen einfachen Aufbau einer Solaranlage zu schaffen, welcher ohne einen Temperaturfühler auf dem Dach bzw. direkt am Solarkollektor auskommt.

Die erfindungsgemäße Solaranlage ist dadurch gekennzeichnet, dass eine Bypassleitung mit einer weiteren Umwälzpumpe zwischen Vorlaufleitung und Rücklaufleitung des Solarkreislaufs vorgesehen ist. Weiterhin weist die Bypassleitung auf der Druckseite der weiteren Umwälzpumpe eine Rückschlagklappe auf.

## Beschreibung

Die Neuerung betrifft eine Solaranlage zur Warmwasserbereitung und/oder Heizungsunterstützung nach dem Oberbegriff des Schutzanspruches 1.

Solaranlagen zur Warmwasserbereitung und/oder Heizungsunterstützung bestehen im Wesentlichen aus mindestens einem Speicher für Warmwasser oder als Pufferspeicher in einem Heizungssystem. Als spezielle Solarspeicher besitzen diese normalerweise eine Heizschlange als Wärmetauscher für die über einen Solarkreislauf eingebrachte Wärme im unteren Bereich. Der Solarkreislauf besteht wiederum aus einer über mindestens einen Solarkollektor geführten Vor- und Rücklaufleitung und besitzt eine Umwälzpumpe für ein Wärmeträgermedium in der Rücklaufleitung. Diese arbeitet gegen eine nachgeschaltete Rückschlagklappe, welche bei Pumpenstillstand Wärmeverluste durch eine unerwünschte Zirkulation im Solarkreislauf verhindert. Ergänzend dazu kann ein weiterer Wärmetauscher im oberen Bereich des Speichers für die so genannte Nachladung durch ein Heizgerät angebracht sein.

Eine Regeleinrichtung erfasst üblicherweise mit mindestens einem Temperaturfühler die Speichertemperatur, vorzugsweise im unteren Bereich, und vergleicht diese mit der Kollektortemperatur, welche der Vorlauftemperatur im Solarkreislauf entspricht.

Bisherige thermische Solaranlagen besitzen in der Regel dazu einen Kollektorfühler, der über eine lange Datenleitung vom Keller bis zum Kollektor auf dem Dach mit der Regelung verbunden ist. Diese Methode ist möglicherweise fehleranfällig, weil Korrosion, Kabelbruch, Witterungseinflüsse oder Tierschäden zur Unterbrechung der Signalübertragung führen können. Dann ist eventuell die Wartung bzw. der Austausch des Kollektorfühlers aufwendig, da oft der Zugang zum Kollektorfeld oder zur elektrischen Leitung erschwert oder sogar unmöglich ist. Zur sinnvollen Regelung der Solaranlage ist die Information über den Kollektor-Temperaturzustand jedoch sehr wichtig. Weiterhin muss üblicherweise an einem Solarkollektor auch eine zugeordnete Fühlerhülse angebracht sein, um einen gut Wärme leitenden Kontakt sicherzustellen und den Kollektorfühler sicher aufzunehmen.

Aus der DE 10 2008 029 527 A1 ist eine solarthermische Anlage und eine Verfahren zum Betrieb einer solchen Anlage bekannt. Dabei ist eine Umwälzpumpe in der zum Kollektor führenden Rücklaufleitung vorgesehen und auf der Saugseite dieser Pumpe ein Drei-Wege-Umschaltventil angeordnet, welches über eine Bypassleitung mit der Vorlaufleitung in Verbindung steht. Die Regelung der Pumpe erfolgt über Vor- und Rücklauftemperaturfühler. Um die Vorlauf- bzw. Kollektortemperatur festzustellen, wird der Bypass geschaltet und die Pumpe in Betrieb genommen. Man vermeidet eine komplette Umwälzung durch den Wärmetauscher im unteren Speicherbereich, damit von dort aus keine Wärme ausgetragen wird, solange der Solarkollektor noch kühl ist. Allerdings verursacht ein derartiges Drei-Wege-Umschaltventil Druckverluste und es läuft die relativ groß bemessene Umwälzpumpe. Weiterhin erscheint die Regelung der Umwälzpumpe in den unterschiedlichen Betriebssituationen einer Solaranlage relativ aufwändig.

Der Neuerung liegt daher die Aufgabe zu Grunde, einen einfachen Aufbau einer Solaranlage zu schaffen, welcher ohne einen Temperaturfühler auf dem Dach bzw. direkt am Solarkollektor auskommt.

Neuerungsgemäß wird dies mit den Merkmalen des Schutzanspruches 1 gelöst. Vorteilhafte Weiterbildungen sind den Unteransprüchen zu entnehmen.

Die Solaranlage ist dadurch gekennzeichnet, dass eine Bypassleitung mit einer weiteren Umwälzpumpe zwischen Vorlaufleitung und Rücklaufleitung des Solarkreislaufs vorgesehen ist. Weiterhin weist die Bypassleitung auf der Druckseite der weiteren Umwälzpumpe eine Rückschlagklappe auf.

In einer bevorzugten Ausführungsform ist die Bypassleitung mit der weiteren Umwälzpumpe in der Nähe der Umwälzpumpe des Solarkreislaufs angeordnet und mündet stromabwärts von dieser Umwälzpumpe und der zugeordneten Rückschlagklappe in die Rücklaufleitung des Solarkreislaufs ein.

In noch einer weiteren Ausführung ist in der Vorlaufleitung des Solarkreislaufs, stromabwärts nach der Ausmündung der Bypassleitung, eine weitere Rückschlagklappe angeordnet. Diese verhindert beim Betrieb der weiteren Umwälzpumpe in der Bypassleitung eine Rückströmung aus dem kollektorfernen Leitungsbereich der Vorlaufleitung.

Vorteilhafterweise befindet sich der Temperaturfühler zur Erfassung der Vorlauftemperatur im Solarkreislauf stromaufwärts vor der Ausmündung der Bypassleitung in der Vorlaufleitung, so dass die Temperatur sowohl beim Durchströmen des Bypasses als auch im Normalbetrieb immer gut erfasst wird.

Die weitere Umwälzpumpe in der Bypassleitung ist vorzugsweise in der Regeleinrichtung invers zur Umwälzpumpe des Solarkreislaufs geschaltet, so dass beide Pumpen nur wechselseitig betreibbar sind und sich dadurch eine einfache elektrische Ansteuerung ergibt. Zusätzlich wird entsprechend die Durchströmung der Leitungen mit den zugeordneten Rückschlagklappen sichergestellt.

Vorteilhafterweise wird die weitere Umwälzpumpe in der Bypassleitung kleiner ausgelegt, weil damit lediglich das Wärmeträgermedium durch den mindestens einen Solarkollektor und am Temperaturfühler zur Erfassung der Vorlauftemperatur vorbei geleitet wird und kein hoher Volumenstrom für einen Wärmetausch erreicht werden muss. Sobald an diesem eine vorgebbare Temperaturdifferenz zwischen Vorlauftemperatur im Solarkreislauf und Speichertemperatur erreicht ist, geht die kleinere Umwälzpumpe in der Bypassleitung außer Betrieb und die Umwälzpumpe des Solarkreislaufs startet. Nach deren Abschalten hätte dann die weitere, kleinere Umwälzpumpe wieder Vorrang. Diese würde nach Ablauf einer vorangegangenen, vorgebbaren Stillstandszeit der Umwälzpumpe des Solarkreislaufs tageszeitabhängig, temperaturabhängig und/oder in vorgebbaren Intervallen starten.

In einer bevorzugten Ausführungsform werden die Bypassleitung mit der weiteren Umwälzpumpe, die mindestens eine Rückschlagklappe sowie der Temperaturfühler zur Erfassung der Vorlauftemperatur im Solarkreislauf gemeinsam mit den übrigen hydraulischen und regeltechnischen Komponenten zu einer Baueinheit zusammengefasst und bilden eine weitgehend vormontierte, abgestimmte und anschlussfertige Solar-Regeleinrichtung. Trotzdem ist auch eine Nachrüstung der neuerungsgemäßen Anordnung bei bestehenden Anlagen denkbar.

Mit der Neuerung steht eine einfach aufgebaute Solaranlage zur Verfügung, welche ohne einen Temperaturfühler auf dem Dach bzw. direkt am Solarkollektor auskommt. Die neuerungsgemäße Erweiterung der Hydraulik um eine weitere Pumpe in einer Bypassleitung zwischen Vor- und Rücklaufleitung des Solarkreislaufs liefert den Vorteil, dass die Temperaturerhöhung am Kollektor erkannt wird, ohne dass direkt am Kollektorfeld gemessen werden muss. Die bisher übliche Fühlerhülse am Kollektor entfällt. Dadurch wird die Fehleranfälligkeit der Anlage reduziert, die Installation und die Wartung der Anlage deutlich vereinfacht.

Neuerungsgemäß wird bei der Umwälzung des Solarfluids zur Temperaturzustandserkennung der mindestens einen Solarkollektors nicht das gesamte System durchflossen. Thermische Verluste treten nicht auf, da der Speicher abgekoppelt ist, indem die entsprechenden Teile der Vor- und Rücklaufleitung im Bereich des Wärmetauschers, welcher zudem in der Regel eine relativ große Menge an Wärmeträgermedium beinhaltet, nicht durchströmt werden.

Durch Wahl einer Kleinstpumpe für die vorgeschlagene Bypasslösung kann der Stromverbrauch reduziert werden. Ein Kleinstpumpe ist einsetzbar, weil schon ein geringer Volumenstrom ausreichend ist, und der hydraulische Widerstand kleiner ist. Auch im Vergleich mit dem Stand der Technik erfährt die eigentliche Solarkreispumpe durch die neuerungsgemäße Anordnung keine zusätzlichen Druckverluste, wie sonst beim Einsatz von Drei-Wege-Ventilen.

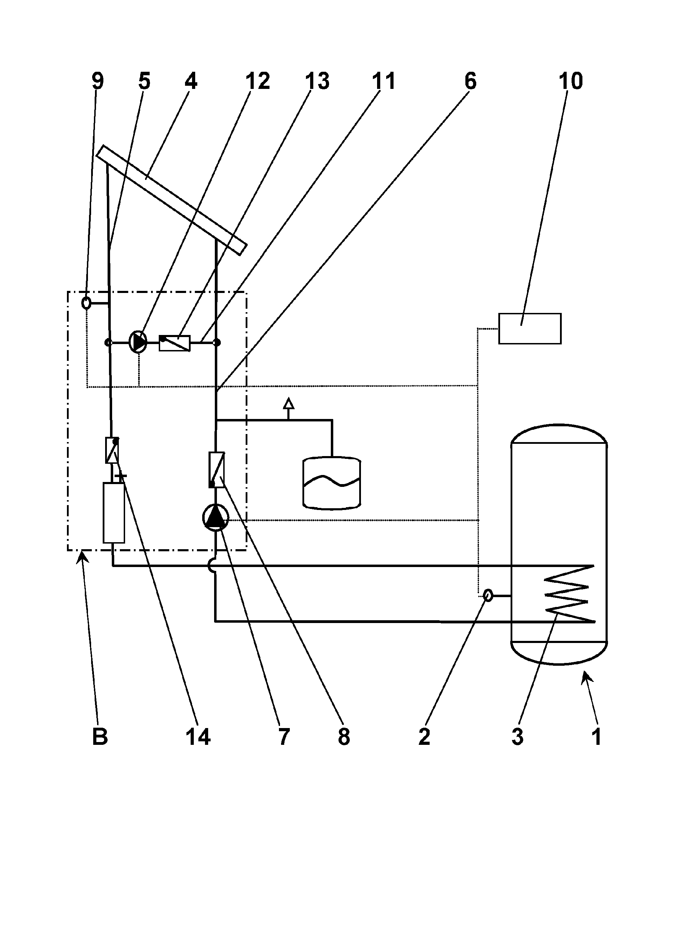

Die Zeichnung stellt ein Ausführungsbeispiel der Neuerung dar und zeigt in einer einzigen Figur schematisch eine Solaranlage.

Die Solaranlage zur Warmwasserbereitung und/oder Heizungsunterstützung besteht aus einem Speicher 1, hier als Warmwasserspeicher dargestellt, mit einem Temperaturfühler 2 zur Erfassung der Speichertemperatur, einem Wärmetauscher 3 zur Beheizung des Speichers 1, einem Solarkreislauf über einen Solarkollektor 4 mit Vorlaufleitung 5 und Rücklaufleitung 6, einer Umwälzpumpe 7 für ein Wärmeträgermedium in der Rücklaufleitung 6, einer dieser Umwälzpumpe 7 nachgeschalteten Rückschlagklappe 8, einem Temperaturfühler 9 zur Erfassung der Vorlauftemperatur im Solarkreislauf sowie einer Regeleinrichtung 10.

Eine Bypassleitung 11 mit einer weiteren Umwälzpumpe 12 und einer weiteren Rückschlagklappe 13 ist zwischen Vorlaufleitung 5 und Rücklaufleitung 6 des Solarkreislaufs vorgesehen.

In der Vorlaufleitung 5 des Solarkreislaufs, stromabwärts nach der Ausmündung der Bypassleitung 11, ist eine weitere Rückschlagklappe 14 angeordnet, welche beim Betrieb der weiteren Umwälzpumpe 12 in der Bypassleitung 11 eine Rückströmung aus dem kollektorfernen Leitungsbereich der Vorlaufleitung 5 unterbindet.

Zu einer Baueinheit B können die Bypassleitung 11 mit der weiteren Umwälzpumpe 12, die mindestens eine Rückschlagklappe 8, 13, 14 sowie der Temperaturfühler 9 zur Erfassung der Vorlauftemperatur im Solarkreislauf gemeinsam mit den übrigen hydraulischen und regeltechnischen Komponenten zusammengefasst sein.

## Patentansprüche

1. Solaranlage zur Warmwasserbereitung und/oder Heizungsunterstützung, mit mindestens einem Speicher (1) für Warmwasser oder als Pufferspeicher in einem Heizungssystem mit mindestens einem Temperaturfühler (2) zur Erfassung der Speichertemperatur, einem Wärmetauscher (3) zur Beheizung des Speichers (1), einem Solarkreislauf über einen Solarkollektor (4) mit Vorlaufleitung (5) und Rücklaufleitung (6), einer Umwälzpumpe (7) für ein Wärmeträgermedium in der Rücklaufleitung (6), einer dieser Umwälzpumpe (7) nachgeschalteten Rückschlagklappe (8), einem Temperaturfühler (9) zur Erfassung der Vorlauftemperatur im Solarkreislauf sowie einer Regeleinrichtung (10),
**dadurch gekennzeichnet, dass** eine Bypassleitung (11) mit einer weiteren Umwälzpumpe (12) zwischen Vorlaufleitung (5) und Rücklaufleitung (6) des Solarkreislaufs vorgesehen ist.

2. Solaranlage nach Anspruch 1,
**dadurch gekennzeichnet, dass** die Bypassleitung (11) mit der weiteren Umwälzpumpe (12) eine Rückschlagklappe (13) aufweist.

3. Solaranlage nach den Ansprüchen 1 oder 2,
**dadurch gekennzeichnet, dass** die Bypassleitung (11) mit der weiteren Umwälzpumpe (12) in der Nähe der Umwälzpumpe (7) des Solarkreislaufs angeordnet ist und stromabwärts von dieser Umwälzpumpe (7) und der zugeordneten Rückschlagklappe (8) in die Rücklaufleitung (6) des Solarkreislaufs einmündet.

4. Solaranlage nach einem der Ansprüche 1 bis 3,
**dadurch gekennzeichnet, dass** in der Vorlaufleitung (5) des Solarkreislaufs, stromabwärts nach der Ausmündung der Bypassleitung (11), eine weitere Rückschlagklappe (14) angeordnet ist, welche beim Betrieb der weiteren Umwälzpumpe (12) in der Bypassleitung (11) eine Rückströmung aus dem kollektorfernen Leitungsbereich der Vorlaufleitung (5) unterbindet.

5. Solaranlage nach einem der Ansprüche 1 bis 4,
**dadurch gekennzeichnet, dass** der Temperaturfühler (9) zur Erfassung der Vorlauftemperatur im Solarkreislauf stromaufwärts vor der Ausmündung der Bypassleitung (11) in der Vorlaufleitung (5) angeordnet ist.

6. Solaranlage nach einem der Ansprüche 1 bis 5,
**dadurch gekennzeichnet, dass** die weitere Umwälzpumpe (12) in der Bypassleitung (11) in der Regeleinrichtung (10) invers zur Umwälzpumpe (7) des Solarkreislaufs geschaltet ist und beide Umwälzpumpen (7, 12) wechselseitig betreibbar sind.

7. Solaranlage nach einem der Ansprüche 1 bis 6,
**dadurch gekennzeichnet, dass** die weitere Umwälzpumpe (12) in der Bypassleitung (11) außer Betrieb geht und die Umwälzpumpe (7) des Solarkreislaufs bei Erfüllung einer vorgebbaren Temperaturdifferenz zwischen Vorlauftemperatur im Solarkreislauf und Speichertemperatur startet.

8. Solaranlage nach einem der Ansprüche 1 bis 7,
**dadurch gekennzeichnet, dass** die weitere Umwälzpumpe (12) in der Bypassleitung (11) nach Ablauf einer vorangegangenen, vorgebbaren Stillstandszeit der Umwälzpumpe (7) des Solarkreislaufs tageszeitabhängig, temperaturabhängig und/oder in vorgebbaren Intervallen startet.

9. Solaranlage nach einem der Ansprüche 1 bis 8,
**dadurch gekennzeichnet, dass** die Bypassleitung (11) mit der weiteren Umwälzpumpe (12), die mindestens eine Rückschlagklappe (8, 13, 14) sowie der Temperaturfühler (9) zur Erfassung der Vorlauftemperatur im Solarkreislauf gemeinsam mit den übrigen hydraulischen und regeltechnischen Komponenten zu einer Baueinheit (B) zusammengefasst sind.
